(19) Europäisches Patentamt

European Patent Office

Office européen des brevets

(11) **EP 2 613 949 B1**

(12) **FASCICULE DE BREVET EUROPEEN**

(45) Date de publication et mention de la délivrance du brevet:
**20.08.2014 Bulletin 2014/34**

(21) Numéro de dépôt: **11754421.3**

(22) Date de dépôt: **09.09.2011**

(51) Int Cl.:
**B60C 11/12** *(2006.01)*   **B60C 11/13** *(2006.01)*

(86) Numéro de dépôt international:
**PCT/EP2011/065616**

(87) Numéro de publication internationale:
**WO 2012/032144 (15.03.2012 Gazette 2012/11)**

(54) **BANDE DE ROULEMENT POUR PNEUMATIQUE COMPORTANT UNE PLURALITE D'INCISIONS**

LUFTREIFENPROFIL MIT MEHREREN INZISIONEN

PNEUMATIC TYRE TREAD COMPRISING A PLURALITY OF INCISIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.09.2010 FR 1057149**

(43) Date de publication de la demande:
**17.07.2013 Bulletin 2013/29**

(73) Titulaires:
• **Compagnie Générale des Etablissements Michelin**
  **63000 Clermont-Ferrand (FR)**
• **MICHELIN Recherche et Technique S.A.**
  **1763 Granges-Paccot (CH)**

(72) Inventeurs:
• **GUILLERMOU, Christian**
  **F-63040 Clermont-Ferrand Cedex 9 (FR)**
• **BERGER, Eric**
  **F-63040 Clermont-Ferrand Cedex 9 (FR)**

(74) Mandataire: **Demaure, Pierre-Yves**
**Manufacture Française**
**des Pneumatiques Michelin**
**23, place des Carmes - Déchaux**
**SGD/LG/PI - F35 - Ladoux**
**63040 Clermont-Ferrand Cedex 9 (FR)**

(56) Documents cités:
**EP-A1- 0 787 601      JP-A- 2003 159 910**
**JP-A- 2006 264 455**

**Description**

DOMAINE DE L'INVENTION

La présente invention concerne une bande de roulement pour pneumatique comportant une pluralité d'incisions et des moyens associés pour réduire la consommation d'énergie en roulage de cette bande. L'invention est notamment relative aux bandes de roulement pour pneumatique destinées à équiper des véhicules automobiles de tourisme.

ETAT DE LA TECHNIQUE

La réduction de la consommation d'énergie liée au déplacement d'un véhicule est un objectif important pour tous les constructeurs automobiles et les manufacturiers. Bien souvent, cet objectif conditionne le développement et la commercialisation des pneumatiques.

Pour réduire cette consommation d'énergie, une solution consiste à diminuer la résistance au roulement des pneumatiques.

Il est connu que la résistance au roulement d'un pneumatique en roulage est liée aux pertes énergétiques dans ledit pneumatique. Ces pertes énergétiques sont dépendantes des caractéristiques d'hystérèse des mélanges de gomme employés dans la bande de roulement. Ces pertes énergétiques sont également dépendantes des cycles de déformations que subit la bande de roulement pendant le roulage du pneumatique.

Plus particulièrement, les déformations subies par la bande de roulement sont dépendantes des forces s'exerçant sur ladite bande au cours du roulage du pneumatique. Ainsi dans la zone de contact entre le pneumatique et le sol, la bande de roulement est soumise à l'action de forces perpendiculaires à la surface de roulement.

Dans la zone de contact, la bande de roulement est également soumise à l'action de forces de cisaillement tangentes à la surface, lesdites forces de cisaillement étant orientées à la fois selon une direction circonférentielle et selon une direction transversale. Sous l'effet de ces différentes forces, la bande de roulement se déforme entraînant des pertes d'énergie par hystérèse.

Le document EP0787601 divulgue une bande de roulement pourvue d'une pluralité d'incisions d'orientations transversales permettant de limiter les pertes d'énergie liées à l'hystérèse des matériaux caoutchoutiques composant la bande de roulement. La largeur de ces incisions est déterminée de sorte que les incisions présentes dans la zone de contact sont fermées. La fermeture d'une incision est due à la déformation circonférentielle des deux blocs de matière entourant cette incision. Sous l'effet des efforts de cisaillement et des efforts de compression, les blocs s'écrasent et les parois latérales opposés desdits blocs se déforment en se rapprochant. Cette déformation des parois latérales entraîne des pertes d'énergie par hystérèse. Une fois l'incision fermée, c'est-à-dire une fois les blocs en contact sur quasiment toute leur paroi latérale, l'écrasement des blocs est stoppé. La perte d'énergie par hystérèse liée à l'écrasement de la gomme est alors également stoppée.

Le document EP0787601 propose ainsi des règles de conception particulières pour la réalisation d'incisions transversales dans la bande de roulement. Le suivi de ces règles permet de diminuer les pertes d'énergie par hystérèse.

La présente invention propose d'améliorer davantage les performances énergétiques d'un pneumatique.

DEFINITIONS

Par pneumatique, on entend tous les types de bandages élastiques soumis au cours d'un roulage à une pression interne ou non.

Par bande de roulement d'un pneumatique, on entend une quantité de composition caoutchouteuse délimitée par des surfaces latérales et par deux surfaces principales dont une est destinée à entrer en contact avec un sol lorsque le pneumatique roule.

Par zone centrale dans la bande de roulement, on entend une zone de la bande de roulement centrée sur le plan équatorial, c'est-à-dire une zone centrée sur le plan passant par le milieu de la bande de roulement et perpendiculaire à l'axe de rotation du pneumatique.

Par largeur de la bande de roulement, on entend la distance séparant deux bords axiaux de la bande de roulement. La manière dont on détermine la largeur d'une bande de roulement est notamment divulguée dans le document WO 2011/073022.

Par bloc, on entend un élément en relief de dimensions équilibrées, par exemple un cube.

Par bande circonférentielle, on entend un ensemble de blocs disposés les uns à la suite des autres sur la circonférence du pneumatique.

Par incision, on entend une découpure (« cut-out » en anglais) délimitant deux parois latérales de deux blocs adjacents, lesdites parois latérales se touchant dans les conditions usuelles de roulage. La largeur d'une incision est inférieure à 2 mm.

Par répartition régulière des incisions, on entend que le nombre total d'incisions dans la zone de contact entre la bande circonférentielle et le sol est en moyenne constant quelque soit la partie de la bande circonférentielle passant dans ladite zone de contact.

Par rainure, on entend une découpure dont les faces de matière ne se touchent pas dans les conditions usuelles de roulage. La largeur d'une rainure est supérieure ou égale à 2 mm.

Par direction circonférentielle, on entend une direction tangente à un cercle dont le centre est sur l'axe de rotation du pneumatique.

Par direction transversale, on entend une direction parallèle à l'axe de rotation dudit pneumatique.

Par direction radiale, on entend une direction perpendiculaire à la direction circonférentielle et à la direction transversale.

Par taux d'entaillement circonférentiel moyen d'une bande circonférentielle, on entend le rapport de la surface des incisions appartenant à la bande circonférentielle à la surface de contact de ladite bande.

Par surface de contact d'une bande circonférentielle, on entend la surface formée par les points de la bande circonférentielle qui entrent en contact avec le sol lorsque le pneumatique roule.

Par surface d'une incision, on entend l'aire occupée par l'incision dans un plan parallèle à la surface de contact de la bande circonférentielle. Ce plan parallèle peut couper l'incision, par exemple, à la moitié de la profondeur de ladite incision.

Par rayon moyen de courbure circonférentiel d'une bande circonférentielle, on entend le rayon que fait cette bande circonférentielle dans un plan circonférentiel. Ce rayon est mesuré dans la partie médiane de la bande circonférentielle.

Par épaisseur moyenne d'une bande circonférentielle, on entend la distance entre la surface de contact de la bande circonférentielle et la surface radialement à l'extérieur de la ceinture de renforcement située sensiblement dans une partie médiane de ladite bande circonférentielle.

## RESUME DE L'INVENTION

L'invention concerne une bande de roulement pour pneumatique de largeur W. Cette bande de roulement comprend une zone centrale de largeur comprise entre 70% et 80% de la largeur W de la bande de roulement. La zone centrale comporte une ou plusieurs bandes circonférentielles, chaque bande circonférentielle de la zone centrale étant délimitée par deux rainures de largeur supérieure ou égale à 2 mm. Chaque bande circonférentielle de la zone centrale comporte une surface de contact destinée à venir en contact avec un sol et une pluralité d'incisions transversales réparties de façon quasiment régulière dans la direction circonférentielle. Chaque incision a sur la surface de contact une largeur inférieure à 2 mm de façon à définir un taux d'entaillement circonférentiel moyen. Ce taux d'entaillement circonférentiel moyen est compris entre 0,5 fois et 1,5 fois le rapport entre une épaisseur moyenne de la bande circonférentielle à un rayon moyen de courbure circonférentielle de la dite bande circonférentielle. Les incisions divisent la bande circonférentielle en une succession de blocs, chaque bloc présentant deux arêtes coupant la surface de contact de la bande circonférentielle. Pour chaque bloc de la bande circonférentielle, au moins une des arêtes dudit bloc est prolongée radialement par une partie inclinée formant chanfrein. Cette partie inclinée relie l'arête à une paroi latérale du bloc de manière à générer un décalage dans la direction circonférentielle entre ladite arête et ladite paroi latérale du bloc.

Au cours d'un roulage, la bande circonférentielle est apte à prendre un premier rayon de courbure correspondant au rayon de courbure d'un pneumatique gonflé non chargé. Dans la zone de contact avec le sol, la bande circonférentielle prend un second rayon de courbure correspondant au rayon de courbure du sol. En amont de la zone de contact, la bande circonférentielle prend un troisième rayon de courbure appelé petit rayon de Koutny. L'existence d'un tel petit rayon de courbure entraîne une forte flexion de la bande circonférentielle en amont de la zone de contact. Cette forte flexion a tendance à écarter les parois latérales des blocs adjacents et donc à élargir les incisions juste avant leur entrée dans la zone de contact, ce qui augmente en conséquence les pertes d'énergie par hystérèse.

L'invention propose de réaliser un chanfrein au niveau d'une arête du bloc. Le chanfrein retarde l'instant du contact entre le bloc et le sol, ce qui permet à l'incision délimitée par ce bloc de commencer à se fermer avant même que ledit bloc ne touche le sol. La déformation du bloc lors de son contact avec le sol est alors limitée puisque l'espace dans lequel ledit bloc peut se déformer est réduit, l'incision ayant commencée à se fermer.

Grâce aux chanfreins, on limite davantage les pertes d'énergie par hystérèse.

De préférence, le taux d'entaillement circonférentiel moyen est compris entre 0,9 fois et 1,1 fois le rapport entre l'épaisseur moyenne de la bande circonférentielle au rayon moyen de courbure circonférentielle.

On limite encore plus les pertes d'énergie par hystérèse.

De préférence, l'arête est décalée par rapport à la paroi latérale d'une distance au moins égale à la largeur de l'incision délimitant ladite paroi latérale.

En donnant une largeur suffisamment importante aux chanfreins, on augmente l'effet recherché.

De préférence, l'arête est décalée par rapport à la paroi latérale d'une distance au plus égale à la moitié de la distance séparant les deux arêtes du bloc.

On évite ainsi une perte de rigidité des blocs en limitant la largeur des chanfreins.

De préférence, la partie inclinée formant chanfrein a une hauteur radiale au moins égale à 5% de la profondeur de l'incision délimitant ladite paroi latérale.

En donnant une hauteur suffisamment importante aux chanfreins, on augmente l'effet recherché.

De préférence, la partie inclinée est inclinée d'un angle au plus égal à 45 degrés avec la direction radiale.

Au-delà de 45 degrés, on réduit trop la surface de contact avec le sol ainsi que la rigidité des blocs, ce qui peut dégrader à terme le bon fonctionnement de la bande de roulement.

Alternativement, chaque bloc comprend deux parties inclinées formant chanfrein, chaque partie inclinée étant associée à une des arêtes du bloc.

Il est ainsi possible de fabriquer des pneumatiques non directionnels à partir de la bande de roulement de l'invention. Ces pneumatiques non directionnels ne comprennent pas de sens préférentiel de roulage.

Alternativement, chaque bloc comprend au moins un plot d'appui faisant saillie depuis une paroi latérale dudit bloc, ledit plot d'appui comprenant une surface active apte à venir en contact avec une paroi latérale d'un autre bloc adjacent.

Les plots d'appui permettent de réduire le volume des incisions, ce qui limite davantage encore la déformation des blocs lorsqu'ils entrent en contact avec le sol. On limite alors encore plus les pertes d'énergie par hystérèse.

De préférence, chaque plot d'appui prolonge la partie inclinée formant chanfrein.

Les plots d'appui étant au plus proche du sol, leur déformation est maximale lors du contact de la bande de roulement avec le sol. Le volume des incisions est ainsi davantage réduit.

Alternativement, les incisions sont inclinées d'un angle au plus égal à 45 degrés par rapport à la direction radiale.

En inclinant les incisions dans la profondeur de la bande de roulement, on s'assure d'une meilleure fermeture desdites incisons. On limite ainsi davantage la déformation des blocs.

BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :

- la figure 1 représente schématiquement une vue partielle en coupe transversale d'un pneumatique comportant une bande de roulement conforme à l'invention ;

- la figure 2 représente schématiquement une vue partielle de la surface de roulement de la bande de roulement de la figure 1 ;

- la figure 3 représente une vue en coupe circonférentielle d'une partie de la bande de roulement de la figure 1 au repos ;

- la figure 4 représente une vue agrandie d'un bloc de la figure 3 ;

- la figure 5 représente une vue en coupe circonférentielle d'une partie de la bande de roulement de la figure 1 en contact avec le sol ;

- la figure 6 représente une seconde variante de la bande de roulement de la figure 1 ;

- la figure 7 représente une troisième variante de la bande de roulement de la figure 1 ;

- la figure 8 représente une quatrième variante de la bande de roulement de la figure 1 ;

- la figure 9 représente une cinquième variante de la bande de roulement de la figure 1.

Dans la description qui va suivre, des éléments identiques ou similaires seront désignés par des références identiques.

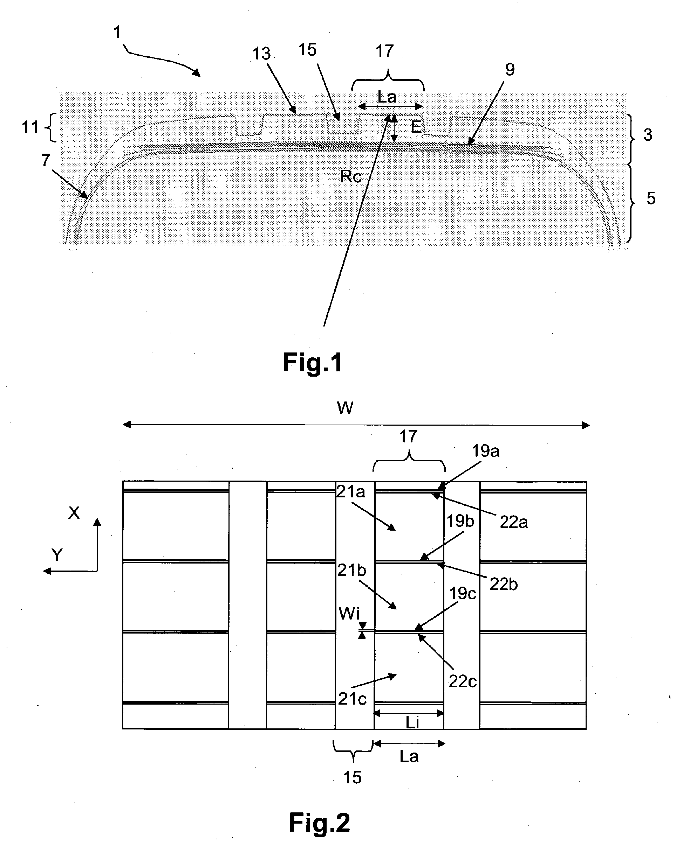

La figure 1 présente schématiquement une vue partielle en coupe transversale d'un pneumatique 1.

Le pneumatique 1 comporte un sommet comprenant une région de sommet 3 prolongée latéralement par des flancs 5 se raccordant à des bourrelets (non représentés) destinés à être en contact avec une jante de montage.

Le pneumatique 1 comprend une armature de carcasse 7 s'étendant d'un bourrelet à l'autre bourrelet en passant par les flancs 5 et la région de sommet 3.

La région de sommet 3 comprend une armature de renforcement 9 surmontée radialement à l'extérieure par une bande de roulement 11.

La bande de roulement 11 comprend radialement à l'extérieur une surface de roulement 13 destinée à venir en contact avec le sol pendant le roulage du véhicule.

La bande de roulement 11 comprend une pluralité de rainures 15 (« groove » en anglais).

Les rainures 15 délimitent des bandes circonférentielles en relief 17.

Chaque bande circonférentielle 17 a une surface de contact destinée à venir en contact avec le sol lorsque le pneumatique roule. L'ensemble des surfaces de contact des différentes bandes circonférentielles forme la surface de roulement du pneumatique.

La bande circonférentielle 17 a une épaisseur moyenne E. L'épaisseur moyenne E est mesurée ici au milieu de la largeur La de la bande circonférentielle 17 entre la surface de contact de la bande circonférentielle 17 et l'armature de renforcement 9.

La bande circonférentielle 17 a également un rayon moyen de courbure circonférentielle Rc mesuré au milieu de la largeur La de la bande circonférentielle 17.

La figure 2 présente schématiquement une vue partielle de la surface de roulement de la bande de roulement.

La bande circonférentielle 17 est pourvue d'une première incision 19a, d'une seconde incision 19b et d'une troisième incision 19c. Les incisions 19a, 19b 19c sont ici d'orientation essentiellement transversale. Les incisions 19a, 19b 19c délimitent respectivement un premier bloc 21a, un second bloc 21b et un troisième bloc 21c.

Le nombre d'incisions dans la bande circonférentielle et les caractéristiques desdites incisions sont déterminées de sorte que le taux d'entaillement circonférentiel moyen de la bande circonférentielle 17 est compris entre 0,5 fois et 1,5 fois le rapport entre l'épaisseur moyenne E de la bande de roulement au rayon moyen de courbure circonférentielle Rc.

Ainsi, le nombre d'incisions N, la largeur des incisions Wi, la longueur des incisions Li, la largeur de la bande circonférentielle La sont déterminés de sorte que l'équation suivante soit respectée :

$$0,5 * E / Rc \leq \frac{Wi * N * Li}{La * 2 * \pi * Rc} \leq 1,5 * E / Rc$$

A titre d'exemple pour un pneumatique de dimension 205/55R16 gonflé à sa pression nominale, l'épaisseur moyenne E est de 10 mm, le rayon moyen de courbure circonférentielle Rc est de 315 mm, la largeur Wi des incisions est de 0,8 mm, la longueur des incisions Li est de 20 mm, le nombre d'incisions N est de 90, et la largeur La de la bande circonférentielle est de 20 mm. On considère ici que la largeur des incisions Wi est constante dans la profondeur de l'incision. Cette largeur est déterminée dans un plan parallèle à la surface de contact. Ce plan parallèle coupe ici l'incision à la moitié de la profondeur de ladite incision.

Dans une variante de réalisation, le nombre d'incisions dans la bande circonférentielle et les caractéristiques desdites incisions sont déterminées de sorte que le taux d'entaillement de la bande circonférentielle 17 est compris entre 0,9 fois et 1,1 fois le rapport entre l'épaisseur moyenne E de la bande de roulement au rayon moyen de courbure circonférentielle Rc.

Dans une autre variante de réalisation, le nombre d'incisions dans la bande circonférentielle est supérieur à 110.

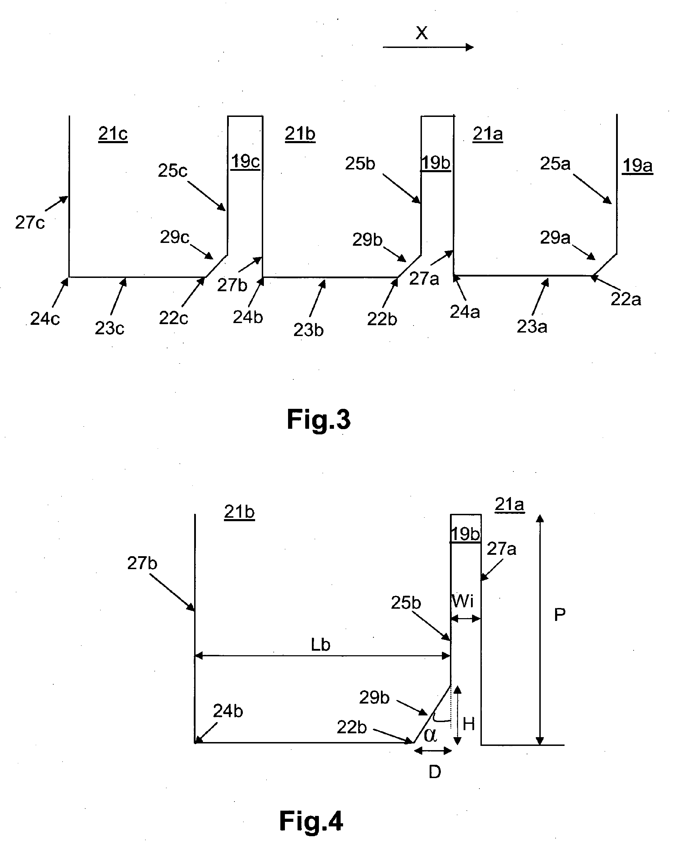

La figure 3 présente schématiquement une vue en coupe circonférentielle des blocs 21a, 21b, 21c au repos, c'est-à-dire lorsque les blocs ne sont pas en contact avec le sol.

Chaque bloc 21a, 21b, 21c comprend une surface externe 23a, 23b, 23c destinée à entrer en contact avec le sol.

Chaque bloc 21a, 21b, 21c comprend une première arête 22a, 22b, 22c et une seconde arête 24a, 24b, 24c.

De plus, chaque bloc 21a, 21b, 21c comprend une première paroi latérale 25a, 25b, 25c et une seconde paroi latérale 27a, 27b, 27c. Les parois latérales des blocs sont les parois qui ont une orientation transversale.

La première incision 19a est ainsi en partie délimitée par la première paroi latérales 25a du premier bloc 21a.

La seconde incision 19b est délimitée par la seconde paroi latérale 27a du premier bloc 21a et par la première paroi latérale 25b du second bloc 21b.

La troisième incision 19c est délimitée par la seconde paroi latérale 27b du second bloc 21b et par la première paroi latérale 25c du troisième bloc 21c.

Chaque bloc 21a, 21b, 21c comprend une partie inclinée 29a, 29b, 29c formant chanfrein. La partie inclinée 29a, 29b, 29c se présente ici sous la forme d'un plan incliné.

Chaque partie inclinée 29a, 29b 29c relie ainsi respectivement la première paroi latérale 25a, 25b, 25c de chaque bloc 21a, 21b, 21c à la première arête 22a, 22b, 22c de manière à générer un décalage entre la première arête et la première paroi latérale.

La figure 4 présente schématique une vue agrandie du second bloc 21b.

La première arête 22b est décalée par rapport à la première paroi latérale 25b d'une distance D au moins égale à la largeur Wi de la seconde incision 19b. La largeur Wi de la seconde incision 19b est égale à la distance entre la seconde paroi latérale 27a du premier bloc et la première paroi latérale 25b du second bloc 21b. Ainsi, pour une incision de largeur 0,8 mm, la distance D est par exemple de l'ordre de 1 mm.

On notera que la largeur Wi est déterminée dans un plan parallèle à la surface de contact. Ce plan est distant de la partie inclinée, de sorte que l'élargissement créé par le chanfrein n'est pas pris en compte pour le calcul de la largeur Wi.

De la même manière, la distance D est au plus égale à la moitié de la distance Lb entre la première paroi latérale 25b et la seconde paroi latérale 27b du second bloc 21b.

Dans une variante de réalisation, la distance D est supérieure à Wi/2 et inférieure à 2* Wi.

On notera que la partie inclinée 29b a une hauteur radiale H au moins égale à 5% de la profondeur P de la seconde incision 19b.

La hauteur radiale H de la partie inclinée est par exemple de l'ordre de 1,5 mm.

En outre, la partie inclinée 29b est inclinée d'un angle $\alpha$ au plus égale à 45 degrés avec la direction radiale.

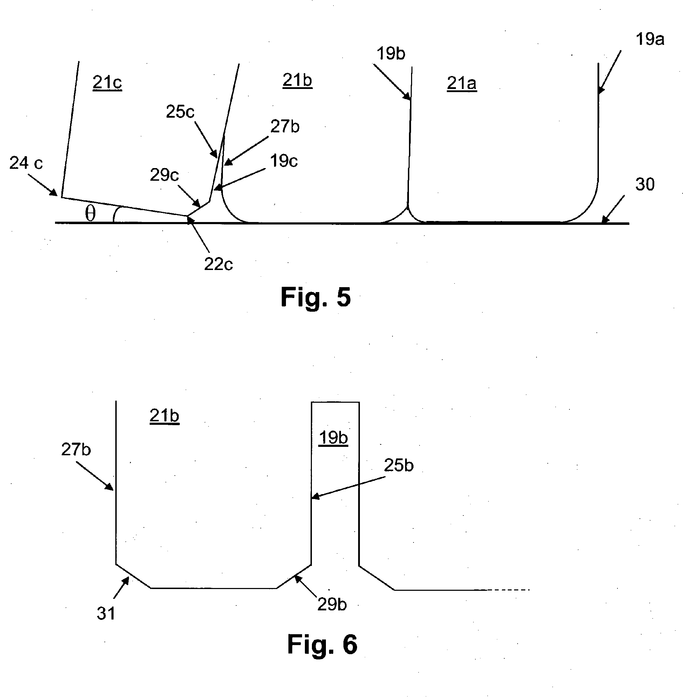

La figure 5 présente une coupe circonférentielle d'une partie de la bande de roulement en contact avec le sol.

Dans cette coupe circonférentielle, le premier bloc 21 a et le second bloc 21b sont en contact avec le sol 30 sur l'ensemble de leur surface de contact. Les blocs 21a, 21b sont écrasés et leurs parois latérales respectives sont déformées de sorte que les incisions 19a, 19b soient fermées.

La figure 5 présente le troisième bloc 21c juste avant que celui-ci ne vienne toucher le sol 30 au niveau de la première arête 22c.

Le troisième bloc 21c va venir toucher le sol 30 avec un angle d'attaque $\theta$.

Grâce à la partie inclinée, l'angle d'attaque $\theta$ est ici faible et la distance entre la seconde paroi latérale 27b du second bloc 21b et la première paroi latérale 25c de troisième bloc 21c est réduite. La troisième incision 19c est alors en partie fermée avant même que la première arête 22c ne touche le sol.

Lors du contact entre le troisième bloc 21c et le sol 30, la première paroi latérale 25c va se déformer mais l'amplitude de cette déformation est réduite car l'espace existant entre le second bloc 21b et le troisième bloc 21c est faible, du fait du décalage généré par la partie inclinée 29c.

On notera que dans l'exemple de la figure 5, la première arête 22c est une arête d'attaque et la seconde arête 24 est une arête de fuite, c'est-à-dire une arête qui entre en contact avec le sol après l'arête d'attaque.

Dans une seconde variante de réalisation visible à la figure 6, chaque bloc 21b comprend deux parties inclinées 29b, 31 formant chanfrein. Chaque partie inclinée est associée à une paroi latérale 25b, 27b.

Il est ainsi possible de fabriquer des pneumatiques non directionnels à partir de la bande de roulement de l'invention. Ces pneumatiques non directionnels ne comprennent pas de sens préférentiel de roulage.

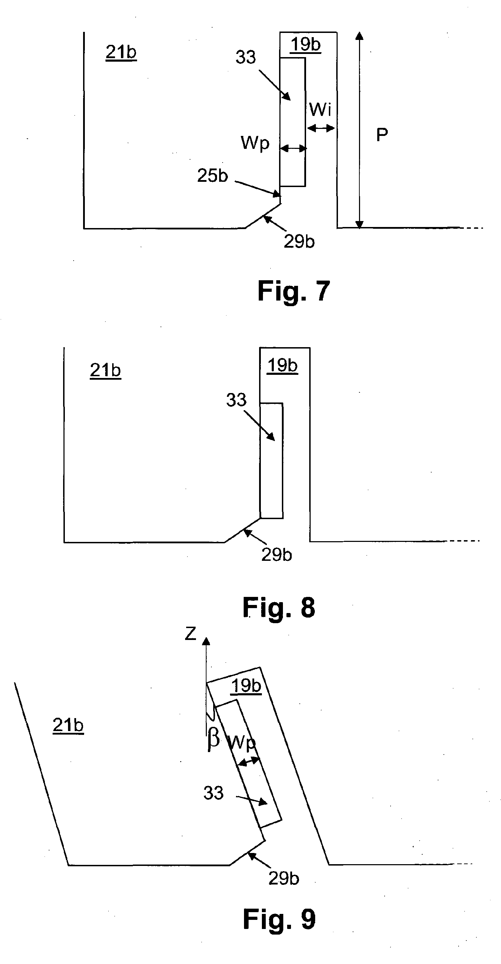

Dans une troisième variante de réalisation visible à la figure 7, chaque bloc 21b comprend un plot d'appui 33 faisant saillie depuis une première paroi latérale 25b. Le plot d'appui comprend une surface active apte à venir en contact avec un bloc en vis-à-vis.

Le plot d'appui permet de réduire le volume de l'incision, ce qui limite davantage les possibilités de déformation des blocs lorsqu'ils entrent en contact avec le sol.

Le plot d'appui est présent sur au moins 50 % de la profondeur P de l'incision. Par exemple, pour une incision de profondeur P égale à 8 mm, le plot a une hauteur de 5 mm.

La largeur du plot d'appui Wp est inférieure à la moitié de la distance entre les parois formant l'incision. Ainsi, pour une distance entre les parois de 0,8 mm, la largeur du plot d'appui est par exemple de 0,2 mm.

On considère dans ce mode de réalisation que la largeur Wi de l'incision correspond à la distance entre le plot et la paroi latérale en vis-à-vis et que la surface d'une incision correspond à l'aire que fait ladite incision dans un plan perpendiculaire aux parois latérales délimitant ladite incision et passant par le plot d'appui.

Dans l'exemple de la figure 7, la largeur Wi de l'incision est de 0,6 mm.

En variante, chaque paroi latérale comprend un demi-bloc faisant saillie depuis ladite paroi latérale. Chaque demi-bloc comprend ainsi une surface active apte à venir en contact avec un demi-bloc en vis-à-vis.

Dans une quatrième variante de réalisation visible à la figure 8, chaque plot d'appui 33 prolonge la partie inclinée 29b formant chanfrein.

Les plots d'appui étant ainsi au plus proche du sol, leur déformation est maximale lors du contact de la bande de roulement avec le sol. Le volume des incisions est ainsi davantage réduit.

Dans une cinquième variante de réalisation, les incisions sont inclinées d'un angle $\beta$ au plus égal à 45 degrés par rapport à la direction radiale Z.

On améliore ainsi davantage la fermeture des incisions au moment du contact avec le sol.

**Revendications**

1.  Bande de roulement pour pneumatique comprenant une zone centrale de largeur comprise entre 70% et 80% de la largeur W de ladite bande de roulement, ladite zone centrale comportant une ou plusieurs bandes circonférentielles (17), chaque bande circonférentielle de la zone centrale étant délimitée par deux rainures de largeur supérieure ou égale à 2 mm, chaque bande circonférentielle de la zone centrale comportant une surface de contact destinée à venir en contact avec un sol et une pluralité d'incisions (19a, 19b, 19c) transversales réparties de façon régulière dans la direction circonférentielle, chaque incision ayant sur la surface de contact une largeur inférieure à 2 mm de façon à définir un taux d'entaillement circonférentiel moyen, ledit taux d'entaillement circonférentiel moyen étant compris entre 0,5 fois et 1,5 fois le rapport entre une épaisseur moyenne (E) de la bande circonférentielle à un rayon moyen de courbure circonférentielle (Rc) de la dite bande circonférentielle, lesdites incisions divisant la bande circonférentielle en une succession de blocs (21a, 21b, 21c), chaque bloc présentant deux arêtes (22a, 22b, 22c, 24) coupant la surface de contact de la bande circonférentielle, **caractérisée en ce que** pour chaque bloc de la bande circonférentielle, au moins une des arêtes dudit bloc est prolongée radialement par une partie inclinée (29a, 29b, 29c, 31) formant chanfrein, ladite partie inclinée reliant ladite arête à une paroi latérale du bloc de manière à générer un décalage dans la direction circonférentielle entre ladite arête et ladite paroi latérale du bloc.

2.  Bande de roulement selon la revendication 1 **caractérisée en ce que** le taux d'entaillement circonférentiel moyen est compris entre 0,9 fois et 1,1 fois le rapport entre l'épaisseur moyenne (E) de la bande circonférentielle au rayon moyen de courbure circonférentielle (Rc).

3.  Bande de roulement selon l'une quelconque des revendications 1 à 2 **caractérisée en ce que** l'arête (22a, 22b, 22c, 24a, 24b, 24c) est décalée par rapport à la paroi latérale (25a, 25b, 25c, 27a, 27b, 27c) d'une distance (D) au moins égale à la largeur (Wi) de l'incision (19a, 19b, 19c) délimitant ladite paroi latérale.

4.  Bande de roulement selon l'une quelconque des revendications 1 à 3 **caractérisée en ce que** l'arête (22a, 22b, 22c, 24a, 24b, 24c) est décalée par rapport à la paroi latérale (25a, 25b, 25c, 27a, 27b, 27c) d'une distance (D) au plus égale à la moitié de la distance (Lb) séparant les deux arêtes dudit bloc.

5.  Bande de roulement selon l'une quelconque des revendications 1 à 4 **caractérisée en ce que** la partie inclinée (29a, 29b, 29c, 31) formant chanfrein a une hauteur radiale (H) au moins égale à 5% de la profondeur (P) de l'incision délimitant la paroi latérale.

6.  Bande de roulement selon l'une quelconque des revendications 1 à 5 **caractérisée en ce que** la partie inclinée (29a, 29b, 29c, 31) est inclinée d'un angle (α) au plus égal à 45 degrés avec la direction radiale.

7.  Bande de roulement selon l'une quelconque des revendications 1 à 6 **caractérisée en ce que** chaque bloc (21a, 21b, 21c) comprend deux parties inclinées (29a, 29b, 29c, 31) formant chanfrein, chaque partie inclinée étant associée à une des arêtes (22a, 22b, 22c, 24) dudit bloc.

8.  Bande de roulement selon l'une quelconque des revendications 1 à 7 **caractérisée en ce que** le bloc comprend au moins un plot d'appui (33) faisant saillie depuis une paroi latérale (25a, 25b, 25c, 27a, 27b, 27c) dudit bloc, ledit plot d'appui comprenant une surface active apte à venir en contact avec une paroi latérale d'un autre bloc adjacent.

9.  Bande de roulement selon la revendication 8 **caractérisée en ce que** chaque plot d'appui (33) prolonge la partie inclinée (29a, 29b, 29c, 31) formant chanfrein.

10. Bande de roulement selon l'une quelconque des revendications 1 à 9 **caractérisée en ce que** les incisions de la bande circonférentielle (19b) sont inclinées radialement d'un angle (β) au plus égal à 45 degrés par rapport à la direction radiale (Z).

**Patentansprüche**

1.  Laufstreifen für einen Luftreifen, welcher einen mittleren Bereich mit einer Breite aufweist, die zwischen 70 % und 80 % der Breite W des Laufstreifens beträgt, wobei der mittlere Bereich einen oder mehrere Umfangsstreifen (17) aufweist, wobei jeder Umfangsstreifen des mittleren Bereichs durch zwei Rillen mit einer Breite begrenzt wird, die größer oder gleich 2 mm ist, wobei jeder Umfangsstreifen des mittleren Bereichs eine Kontaktfläche, die dazu bestimmt ist, mit einem Boden in Kontakt zu kommen, und mehrere quer verlaufende Einschnitte (19a, 19b, 19c), die gleichmäßig in Umfangsrichtung verteilt sind, aufweist, wobei jeder Einschnitt auf der Kontaktfläche eine Breite von weniger als 2 mm aufweist, so dass ein mittlerer Negativprofilanteil in Umfangsrichtung definiert wird, wobei der mittlere Negativprofilanteil in Umfangsrichtung das 0,5-Fache bis 1,5-Fache des Verhältnisses zwischen einer mittleren Dicke (E) des Umfangsstreifens und einem mittleren Krümmungsradius in Umfangsrichtung (Rc) dieses Umfangsstreifens beträgt, wobei die Einschnitte den Umfangsstreifen in eine Reihe von Blöcken (21a, 21b, 21c) aufteilen, wobei jeder Block zwei Kanten (22a, 22b, 22c, 24) aufweist, welche die Kontaktfläche des Umfangsstreifens schneiden, **dadurch gekennzeichnet, dass** für jeden Block des Umfangsstreifens mindestens eine der Kanten des Blocks durch einen geneigten Teil (29a, 29b, 29c, 31), der eine Abschrägung bildet, radial verlängert ist, wobei der geneigte Teil die Kante mit einer Seitenwand des Blocks verbindet, derart, dass ein Versatz in der Umfangsrichtung zwischen der Kante und der Seitenwand des Blocks erzeugt wird.

2. Laufstreifen nach Anspruch 1, **dadurch gekennzeichnet, dass** der mittlere Negativprofilanteil in Umfangsrichtung das 0,9-Fache bis 1,1-Fache des Verhältnisses zwischen der mittleren Dicke (E) des Umfangsstreifens und dem mittleren Krümmungsradius in Umfangsrichtung (Rc) beträgt.

3. Laufstreifen nach einem der Ansprüche 1 bis 2, **dadurch gekennzeichnet, dass** die Kante (22a, 22b, 22c, 24a, 24b, 24c) bezüglich der Seitenwand (25a, 25b, 25c, 27a, 27b, 27c) um einen Abstand (D) versetzt ist, der mindestens gleich der Breite (Wi) des Einschnitts (19a, 19b, 19c) ist, der die Seitenwand begrenzt.

4. Laufstreifen nach einem der Ansprüche 1 bis 3, **dadurch gekennzeichnet, dass** die Kante (22a, 22b, 22c, 24a, 24b, 24c) bezüglich der Seitenwand (25a, 25b, 25c, 27a, 27b, 27c) um einen Abstand (D) versetzt ist, der höchstens gleich der Hälfte des Abstands (Lb) ist, der die zwei Kanten des Blocks trennt.

5. Laufstreifen nach einem der Ansprüche 1 bis 4, **dadurch gekennzeichnet, dass** der geneigte Teil (29a, 29b, 29c, 31), der eine Abschrägung bildet, eine radiale Höhe (H) aufweist, die mindestens 5 % der Tiefe (P) des Einschnitts beträgt, welcher die Seitenwand begrenzt.

6. Laufstreifen nach einem der Ansprüche 1 bis 5, **dadurch gekennzeichnet, dass** der geneigte Teil (29a, 29b, 29c, 31) um einen Winkel ($\alpha$) bezüglich der radialen Richtung geneigt ist, der höchstens 45 Grad beträgt.

7. Laufstreifen nach einem der Ansprüche 1 bis 6, **dadurch gekennzeichnet, dass** jeder Block (21a, 21b, 21c) zwei geneigte Teile (29a, 29b, 29c, 31) aufweist, die eine Abschrägung bilden, wobei jeder geneigte Teil einer der Kanten (22a, 22b, 22c, 24) des Blocks zugeordnet ist.

8. Laufstreifen nach einem der Ansprüche 1 bis 7, **dadurch gekennzeichnet, dass** der Block mindestens ein Abstützstück (33) aufweist, das von einer Seitenwand (25a, 25b, 25c, 27a, 27b, 27c) des Blocks aus vorsteht, wobei das Abstützstück eine aktive Fläche aufweist, die geeignet ist, mit einer Seitenwand eines benachbarten anderen Blocks in Kontakt zu kommen.

9. Laufstreifen nach Anspruch 8, **dadurch gekennzeichnet, dass** jedes Abstützstück (33) den geneigten Teil (29a, 29b, 29c, 31), der eine Abschrägung bildet, verlängert.

10. Laufstreifen nach einem der Ansprüche 1 bis 9, **dadurch gekennzeichnet, dass** die Einschnitte des Umfangsstreifens (19b) radial um einen Winkel ($\beta$) bezüglich der radialen Richtung (Z) geneigt sind, der höchstens 45 Grad beträgt.

**Claims**

1. Tread for a tyre comprising a central zone with a width of between 70% and 80% of the width W of the said tread, the said central zone comprising one or more circumferential bands (17), each circumferential band of the central zone being delimited by two grooves of a width greater than or equal to 2 mm, each circumferential band of the central zone comprising a contact surface intended to come into contact with the ground and a plurality of transverse sipes (19a, 19b, 19c) distributed evenly in the circumferential direction, each sipe having, on the contact surface, a width less than 2 mm so as to define a mean circumferential void ratio, the said mean circumferential void ratio being between 0.5 times and 1.5 times the ratio between a mean thickness (E) of the circumferential band to a mean circumferential radius of curvature (Rc) of the said circumferential band, the said sipes dividing the circumferential band into a succession of blocks (21a, 21b, 21c), each block having two edge corners (22a, 22b, 22c, 24) intersecting the contact surface of the circumferential band, **characterized in that**, for each block of the circumferential band, at least one of the edge corners of the said block is extended radially by an inclined part (29a, 29b, 29c, 31) forming a chamfer, the said inclined part connecting the said edge corner to a lateral wall of the block in such a way as to generate an offset in the circumferential direction between the said edge corner and the said lateral wall of the block.

2. Tread according to Claim 1, **characterized in that** the mean circumferential void ratio is between 0.9 times and 1.1 times the ratio between the mean thickness (E) of the circumferential band to the mean circumferential radius of curvature (Rc).

3. Tread according to either one of Claims 1 and 2, **characterized in that** the edge corner (22a, 22b, 22c, 24a, 24b, 24c) is offset with respect to the lateral wall (25a, 25b, 25c, 27a, 27b, 27c) by a distance (D) at least equal to the width (Wi) of the sipe (19a, 19b, 19c) delimiting the said lateral wall.

4. Tread according to any one of Claims 1 to 3, **characterized in that** the edge corner (22a, 22b, 22c, 24a, 24b, 24c) is offset with respect to the lateral wall (25a, 25b, 25c, 27a, 27b, 27c) by a distance (D) at most equal to half the distance (Lb) separating the two edge corners of the said block.

5. Tread according to any one of Claims 1 to 4, **characterized in that** the chamfer-forming inclined part (29a, 29b, 29c, 31) has a radial height (H) at least equal to 5% of the depth (P) of the sipe delimiting the lateral wall.

6. Tread according to any one of Claims 1 to 5, **characterized in that** the inclined part (29a, 29b, 29c, 31) is inclined by an angle ($\alpha$) at most equal to 45 degrees to the radial direction.

7. Tread according to any one of Claims 1 to 6, **characterized in that** each block (21a, 21b, 21c) comprises two chamfer-forming inclined parts (29a, 29b, 29c, 31), each inclined part being associated with one of the edge corners (22a, 22b, 22c, 24) of the said block.

8. Tread according to any one of Claims 1 to 7, **characterized in that** the block comprises at least one pressure pad (33) projecting from a lateral wall (25a, 25b, 25c, 27a, 27b, 27c) of the said block, the said pressure pad comprising an active surface able to come into contact with a lateral wall of another, adjacent, block.

9. Tread according to Claim 8, **characterized in that** each pressure pad (33) extends the chamfer-forming inclined part (29a, 29b, 29c, 31).

10. Tread according to any one of Claims 1 to 9, **characterized in that** the sipes in the circumferential band (19b) are inclined radially by an angle ($\beta$) at most equal to 45 degrees with respect to the radial direction (Z).

**Fig.1**

**Fig.2**

**Fig.3**

**Fig.4**

21c

25c

27b

24 c

29c

19c

θ

22c

19b

21b

21a

19a

30

## Fig. 5

21b

27b

19b

25b

29b

31

## Fig. 6

21b

19b

33

Wi

Wp

P

25b

29b

**Fig. 7**

21b

19b

33

29b

**Fig. 8**

Z

19b

21b

β Wp

33

29b

**Fig. 9**

## RÉFÉRENCES CITÉES DANS LA DESCRIPTION

### Documents brevets cités dans la description

- EP 0787601 A

- WO 2011073022 A